# EUROPEAN PATENT SPECIFICATION

(11) **EP 3 705 315 B1**
(45) Date of publication and mention of the grant of the patent: **08.12.2021**
(21) Application number: 20159023.9
(22) Date of filing: 24.02.2020
(51) Int. Cl.: B60C 11/03, B60C 11/04, B60C 11/13, B60C 11/12

(54) **TIRE**
REIFEN
PNEUMATIQUE

(30) Priority: 05.03.2019 JP 2019039630
(43) Date of publication of application: 09.09.2020
(73) Proprietor: Sumitomo Rubber Industries, Ltd., Kobe-shi, Hyogo-ken 651-0072 (JP)
(72) Inventor: TAGASHIRA, Masao, Kobe-shi, Hyogo-ken, 651-0072 (JP)
(74) Representative: Manitz Finsterwald Patent- und Rechtsanwaltspartnerschaft mbB

(56) References cited:
- JP-A- H 023 501
- JP-A- H03 167 008
- JP-A- 2014 019 309
- JP-A- 2018 161 998
- US-A1- 2008 092 999
- US-A1- 2009 188 596
- US-A1- 2017 057 296
- US-A1- 2019 023 077
- US-S1- D 579 865

## Description

### BACKGROUND OF THE INVENTION

### Field of the Invention

The present invention relates to a tire having a tread portion.

### Description of the Background Art

Conventionally, tires configured to inhibit entry of stones into grooves of a tread portion thereof, i.e., stone trapping, have been known (see, for example, Japanese Laid-Open Patent Publication No. 2015-110384).

As technologies to improve the wear resistance of tires, configurations in which groove widths are reduced have been known. However, configurations in which groove widths are merely set to be small, have a problem in that stone trapping easily occurs. In view of the problem, further improvements have been desired in addition to those made in the technology disclosed in the above-described Japanese Laid-Open Patent Publication No. 2015-110384.

A tire in accordance with the preamble of claim 1 is known from JP H02 3501 A and JP H03 167008 A.

### SUMMARY OF THE INVENTION

The present invention has been made in view of the above-described circumstances, and a main object of the present invention is to provide a tire capable of easily inhibiting stone trapping while improving wear resistance.

The present invention is a tire having a tread portion. The tread portion is divided, by a first main groove continuously extending in a tire circumferential direction, into a first land portion located on one side in a tire axial direction relative to the first main groove and a second land portion located on another side in the tire axial direction relative to the first main groove. A first lateral groove extending in the tire axial direction from the first main groove and having a terminating end in the first land portion is formed in the first land portion. A first lateral sipe extending in the tire axial direction from the first main groove is formed in the second land portion. A first imaginary extension groove obtained by extending the first lateral groove into the first main groove overlaps with a first imaginary extension sipe obtained by extending the first lateral sipe into the first main groove.

In the tire according to the present invention, it is preferable that a second lateral groove extending in the tire axial direction from the first main groove and having a terminating end in the second land portion is formed in the second land portion, a second lateral sipe extending from the first main groove in the tire axial direction is formed in the first land portion, and a second imaginary extension groove obtained by extending the second lateral groove into the first main groove overlaps with a second imaginary extension sipe obtained by extending the second lateral sipe into the first main groove.

In the tire according to the present invention, the first main groove is a shoulder main groove that is located farthest from a tire equator.

In the tire according to the present invention, the first land portion is a shoulder land portion that is delimited between the shoulder main groove and a tread ground-contact edge.

In the tire according to the present invention, it is preferable that a second main groove continuously extending in the tire circumferential direction is formed on an inner side in the tire axial direction relative to the shoulder main groove, and the second land portion is a crown land portion between the shoulder main groove and the second main groove.

In the tire according to the present invention, it is preferable that the first lateral sipe extending inward in the tire axial direction from the first main groove communicates with the second main groove.

In the tire according to the present invention, it is preferable that a width of the first lateral groove decreases from the first main groove toward the terminating end.

In the tire according to the present invention, it is preferable that a width of the second lateral groove decreases from the first main groove toward the terminating end.

In the tire according to the present invention, a chamfered portion is formed at an end edge part of the first lateral groove by tilting a side wall of the first land portion relative to a tread surface of the first land portion.

In the tire according to the present invention, it is preferable that the chamfered portion is formed on each of opposed sides in the tire circumferential direction of the first lateral groove.

In the tire according to the present invention, it is preferable that an angle of the first lateral groove relative to the tire circumferential direction is 70 to 110° .

In the tire according to the present invention, the first lateral groove is formed in the first land portion located on the one side relative to the first main groove, and the first lateral sipe is formed in the second land portion located on the other side relative to the first main groove. Since the first lateral groove has the terminating end in the first land portion, the volume of the first land portion and the rigidity thereof in the tire circumferential direction are easily ensured, whereby the wear resistance is improved.

Further, since the first imaginary extension groove obtained by extending the first lateral groove into the first main groove overlaps with the first imaginary extension sipe obtained by extending the first lateral sipe into the first main groove, the rigidity in the tire circumferential direction of the tread portion locally decreases near the first lateral groove and the first lateral sipe. Accordingly, it becomes easy for a stone having entered the first lateral groove to be removed by deformation of the first land portion, whereby it becomes likely to be easily restored from the stone-trapped state.

### BRIEF DESCRIPTION OF THE DRAWINGS

FIG. 1 is a development of a tread portion, showing a schematic configuration of a tire according to an embodiment of the present invention;
FIG. 2 is a development of a tread portion, showing another configuration of the tire according to the embodiment of the present invention;
FIG. 3 is a cross-sectional view, of a first land portion, that is taken so as to traverse a first lateral groove in FIG. 1 in a tire circumferential direction; and
FIG. 4 is a development showing the tread portion in FIG. 1 in detail.

### DESCRIPTION OF THE PREFERRED EMBODIMENTS

Hereinafter, an embodiment of the present invention will be described with reference to the drawings.

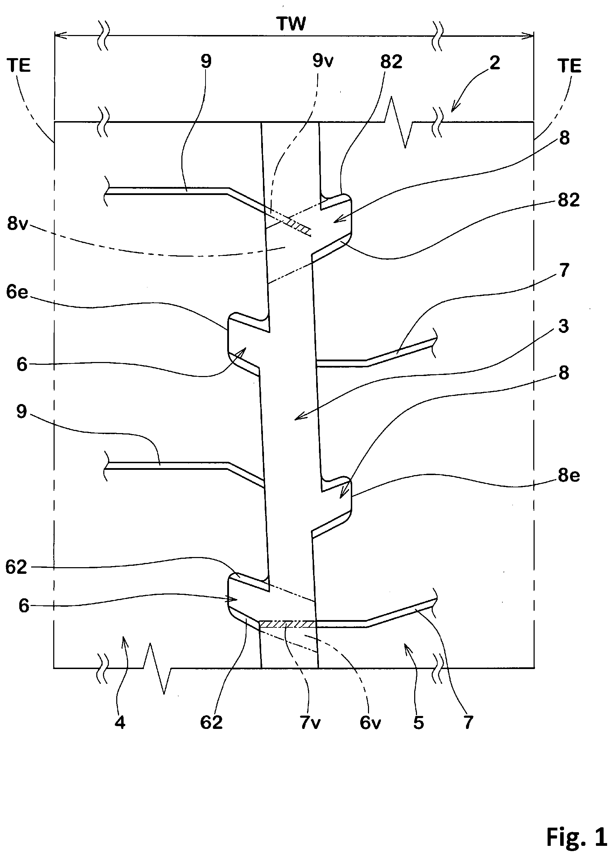

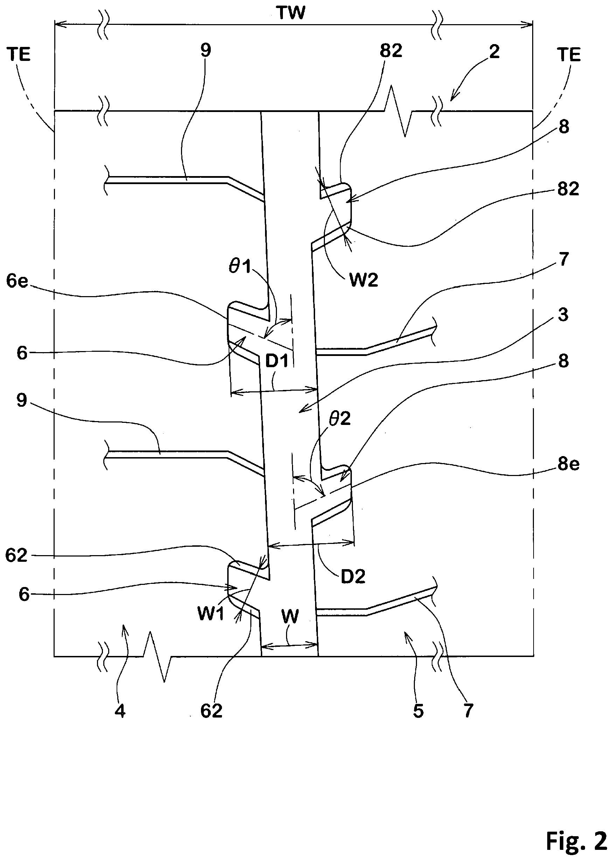

FIGS. 1 and 2 are each a development of a tread portion 2 of a tire according to the present embodiment. As shown in FIGS. 1 and 2, the tire according to the present embodiment has the tread portion 2. The tire is suitably used as, for example, a heavy-duty tire to be mounted to a commercial car that has many chances of running on unpaved roads, or the like. However, the use of the tire is not limited thereto.

A first main groove 3 is formed in the tread portion 2. The first main groove 3 continuously extends linearly or zigzag in a tire circumferential direction. The first main groove 3 in the present embodiment is a zigzag circumferential groove that is bent in such regions as to communicate with first lateral grooves 6 and second lateral grooves 8 described later.

The tread portion 2 is divided, by the first main groove 3, into a first land portion 4 located on one side in a tire axial direction relative to the first main groove 3 and a second land portion 5 located on the other side in the tire axial direction relative to the first main groove 3.

The width of the first main groove 3 can be variously determined in a conventional manner. For example, the width W of first main groove 3 in the tire according to the present embodiment is preferably 3.0% to 8.0% of a tread ground-contact width TW. The depth of the first main groove 3 can be variously determined in a conventional manner. For example, the depth of the first main groove 3 in the tire according to the present embodiment is, for example, preferably 8 to 15 mm. However, the dimensions of the first main groove 3 are not limited to these ranges.

The tread ground-contact width TW is defined as the distance in the tire axial direction between tread ground-contact edges TE and TE in a normal state.

Here, the "normal state" refers to a state where the tire is mounted to a normal rim (not shown) and inflated to a normal internal pressure, and no load is applied to the tire. Hereinafter, the dimensions and the like of components of the tire are each a value measured in the normal state unless otherwise specified.

The "normal rim" refers to a rim that is defined, in a standard system including a standard on which the tire is based, by the standard for each tire, and is, for example, the "Standard Rim" in the JATMA standard, the "Design Rim" in the TRA standard, or the "Measuring Rim" in the ETRTO standard.

The "normal internal pressure" refers to an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard. In a case where the tire is for passenger cars, the normal internal pressure is, for example, 180 kPa.

The tread ground-contact edges TE each refer to a tread ground-contact edge on the outermost side in the tire axial direction when a normal load is applied to the tire in the normal state, and the tire is brought into contact with a flat surface at a camber angle of 0°. In the normal state, the distance in the tire axial direction between the tread ground-contact edges TE and TE is defined as the tread ground-contact width TW.

The "normal load" refers to a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard. In the case where the tire is for passenger cars, the normal load is, for example, a load corresponding to 88% of the aforementioned load.

In FIGS. 1 and 2, the first main groove 3 may be disposed in any region in the tread portion 2. For example, a crown main groove or a middle main groove described later may serve as the first main groove 3. In addition, a plurality of the first main grooves 3 may be disposed.

First lateral grooves 6 are formed in the first land portion 4. The first lateral grooves 6 extend from the first main groove 3 to the one side in the tire axial direction. The drainage performance of the first land portion 4 is improved by the first lateral grooves 6. In addition, the grip performance in a front-rear direction of the tire is improved on an unpaved road owing to a so-called edge effect which is exhibited by the first lateral grooves 6 and in which a road surface is scratched by the end edges of the first land portion 4.

Each first lateral groove 6 has a terminating end 6e in the first land portion 4. Accordingly, the volume of the first land portion 4 and the rigidity thereof in the tire circumferential direction are easily ensured, whereby the wear resistance of the first land portion 4 is improved.

First lateral sipes 7 are formed in the second land portion 5. Here, the "sipes" each refer to a slit having a width not greater than 2 mm (preferably not greater than 1.5 mm), and are closed under the ground-contact condition of applying the normal load to the tire, i.e., at a high ground-contact pressure on a tread surface.

The first lateral sipes 7 extend from the first main groove 3 to the other side in the tire axial direction. The drainage performance of the second land portion 5 is improved by the first lateral sipes 7. In addition, the grip performance in the front-rear direction of the tire is improved on an unpaved road owing to the edge effect exhibited by the first lateral sipes 7.

As shown in FIG. 1, a first imaginary extension groove 6v obtained by extending each first lateral groove 6 into the first main groove 3 overlaps with a first imaginary extension sipe 7v obtained by extending the corresponding first lateral sipe 7 into the first main groove 3. A hatched region in the first imaginary extension groove 6v in FIG. 1 is a region in which the first imaginary extension groove 6v and the first imaginary extension sipe 7v overlap with each other. In the present embodiment, the entirety of the first imaginary extension sipe 7v overlaps with the first imaginary extension groove 6v.

If the first imaginary extension groove 6v and the first imaginary extension sipe 7v overlap with each other in the first main groove 3, the rigidity in the tire circumferential direction of the tread portion 2 locally decreases near the first lateral groove 6 and the first lateral sipe 7. Accordingly, it becomes easy for a stone having entered the first lateral groove 6 to be removed by deformation of the first land portion 4, whereby it becomes likely to be easily restored from the stone-trapped state.

The region in which the first lateral groove 6 intersects with the first main groove 3 (the region of the first imaginary extension groove 6v) is a region in which stone trapping particularly easily occurs. However, in the present embodiment, since the first lateral sipe 7 is located such that the first imaginary extension sipe 7v overlaps with the region of the first imaginary extension groove 6v, it becomes likely to be easily restored from the stone-trapped state as described above.

As shown in FIG. 2, the width W1 of the first lateral groove 6 preferably decreases from the first main groove 3 toward the terminating end 6e. Accordingly, the volume of the first land portion 4 and the rigidity thereof in the tire circumferential direction are easily ensured, whereby the wear resistance of the first land portion 4 is improved. In addition, the width W1 of the first lateral groove 6 increases at such a location as to communicate with the first main groove 3, and stone trapping into the first lateral groove 6 is inhibited.

The angle *θ*1 of the first lateral groove 6 relative to the tire circumferential direction is preferably 70 to 110° . Accordingly, local decrease in the rigidity of the first land portion 4 is suppressed in a peripheral region in which the first lateral groove 6 communicates with the first main groove 3, whereby damage, such as defects, to the first land portion 4 is suppressed.

The depth of the first lateral groove 6 is preferably not less than 80% of the depth of the first main groove 3. Accordingly, sufficient drainage performance and grip performance are attained also at the terminal stage of wear.

It is preferable that the first lateral sipes 7 extend linearly and are bent on a side where the first main groove 3 is present. Owing to such first lateral sipes 7, the edge effect is accelerated and favorable grip performance is attained on an unpaved road.

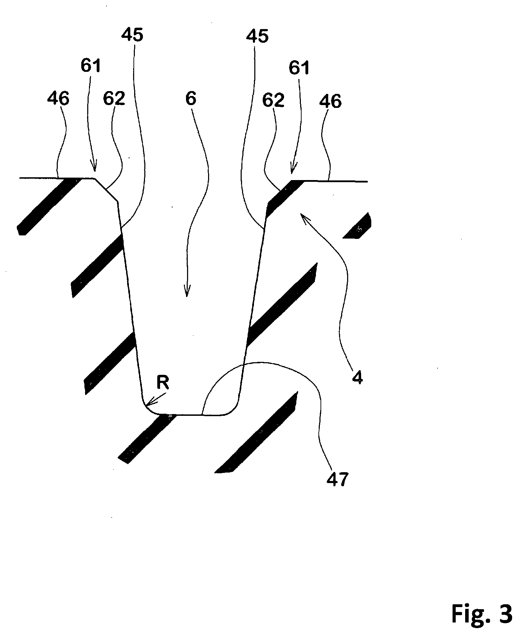

FIG. 3 is a cross-sectional view, of the first land portion 4, that is taken so as to traverse the first lateral groove 6 in the tire circumferential direction. The first lateral groove 6 in the present embodiment has a chamfered portion 62 formed at an end edge part 61 thereof. The chamfered portion 62 is formed by tilting a side wall 45 of the first land portion 4 relative to a tread surface 46 of the first land portion 4. The width W1 of the first lateral groove 6 increases at the chamfered portion 62.

The chamfered portion 62 alleviates the concentration of stress on the side wall 45 of the first land portion 4 and suppresses damage to the first land portion 4.

The chamfered portion 62 is preferably formed on each of opposed sides in the tire circumferential direction of the first lateral groove 6. Accordingly, damage to the first land portion 4 is further suppressed.

The angle of the chamfered portion 62 relative to a normal to the tread surface 46 of the first land portion 4 is preferably not less than 30°. Accordingly, damage to the first land portion 4 is further suppressed.

The tread surface 46 of the first land portion 4 and a groove bottom part 47 of the first lateral groove 6 are preferably connected by curved surfaces, and the radius R of each curved surface is preferably not less than 1 mm. Accordingly, the concentration of stress on the connection parts between the tread surface 46 and the groove bottom part 47 is alleviated, and damage to the tread portion 2 is suppressed.

As shown in FIGS. 1 and 2, second lateral grooves 8 are formed in the second land portion 5. The second lateral grooves 8 extend from the first main groove 3 to the other side in the tire axial direction. The drainage performance of the second land portion 5 is improved by the second lateral grooves 8. In addition, the grip performance of the tire is improved on an unpaved road owing to the so-called edge effect which is exhibited by the second lateral grooves 8 and in which a road surface is scratched by the end edges of the second land portion 5.

Each first lateral groove 6 and each second lateral groove 8 are preferably tilted in directions opposite to each other with respect to the tire axial direction. Owing to such a first lateral groove 6 and second lateral groove 8, the above-described edge effect is accelerated and the grip performance of the tire is further improved.

The second lateral groove 8 has a terminating end 8e in the second land portion 5. Accordingly, the volume of the second land portion 5 and the rigidity thereof in the tire circumferential direction are easily ensured, whereby the wear resistance of the second land portion 5 is improved.

Second lateral sipes 9 are formed in the first land portion 4. The second lateral sipes 9 extend from the first main groove 3 to the one side in the tire axial direction. The drainage performance of the first land portion 4 is improved by the second lateral sipes 9. In addition, the grip performance of the tire is improved on an unpaved road owing to the so-called edge effect which is exhibited by the second lateral sipes 9 and in which a road surface is scratched by the end edges of the first land portion 4.

A second imaginary extension groove 8v obtained by extending each second lateral groove 8 into the first main groove 3 overlaps with a second imaginary extension sipe 9v obtained by extending the corresponding second lateral sipe 9 into the first main groove 3. A hatched region in the second imaginary extension groove 8v in FIG. 1 is a region in which the second imaginary extension groove 8v and the second imaginary extension sipe 9v overlap with each other. In the present embodiment, a part of the second imaginary extension sipe 9v overlaps with the second imaginary extension groove 8v.

If the second imaginary extension groove 8v and the second imaginary extension sipe 9v overlap with each other in the first main groove 3, the rigidity in the tire circumferential direction of the tread portion 2 locally decreases near the second lateral groove 8 and the second lateral sipe 9. Accordingly, it becomes easy for a stone having entered the second lateral groove 8 to be removed by deformation of the second land portion 5, whereby it becomes likely to be easily restored from the stone-trapped state.

The width W2 of the second lateral groove 8 preferably decreases from the first main groove 3 toward the terminating end 8e. Accordingly, the volume of the second land portion 5 and the rigidity thereof in the tire circumferential direction are easily ensured, whereby the wear resistance of the second land portion 5 is improved. In addition, the width W2 of the second lateral groove 8 increases at such a location as to communicate with the first main groove 3, and stone trapping into the second lateral groove 8 is inhibited.

The second lateral groove 8 is preferably formed in the same manner as the first lateral groove 6 is. For example, the width W2 of the second lateral groove 8 is preferably 2 to 5 mm. The distance D2 in the tire axial direction from the first land portion 4 to the terminating end 8e of the second lateral groove 8 is preferably 120% to 160% of the width W of the first main groove 3. The distance D2 is preferably 10 to 15 mm. The angle θ2 of the second lateral groove 8 relative to the tire circumferential direction is preferably 70 to 110°. The depth of the second lateral groove 8 is preferably not less than 80% of the depth of the first main groove 3. It is preferable that the second lateral sipe 9 extends linearly and is bent on the side where the first main groove 3 is present.

The second lateral groove 8 preferably has a chamfered portion 82 formed at an end edge part thereof. The chamfered portion 82 is preferably formed on each of opposed sides in the tire circumferential direction of the second lateral groove 8. The angle of the chamfered portion relative to a normal to the tread surface of the second land portion 5 is preferably not less than 30°. The tread surface of the second land portion 5 and a groove bottom part of the second lateral groove 8 are preferably connected by curved surfaces, and the radius of each curved surface is preferably not less than 1 mm. The reason why these features of the second lateral grooves 8 are preferable, is the same as the reason why the aforementioned features of the first lateral grooves 6 are preferable, and thus will not be explained.

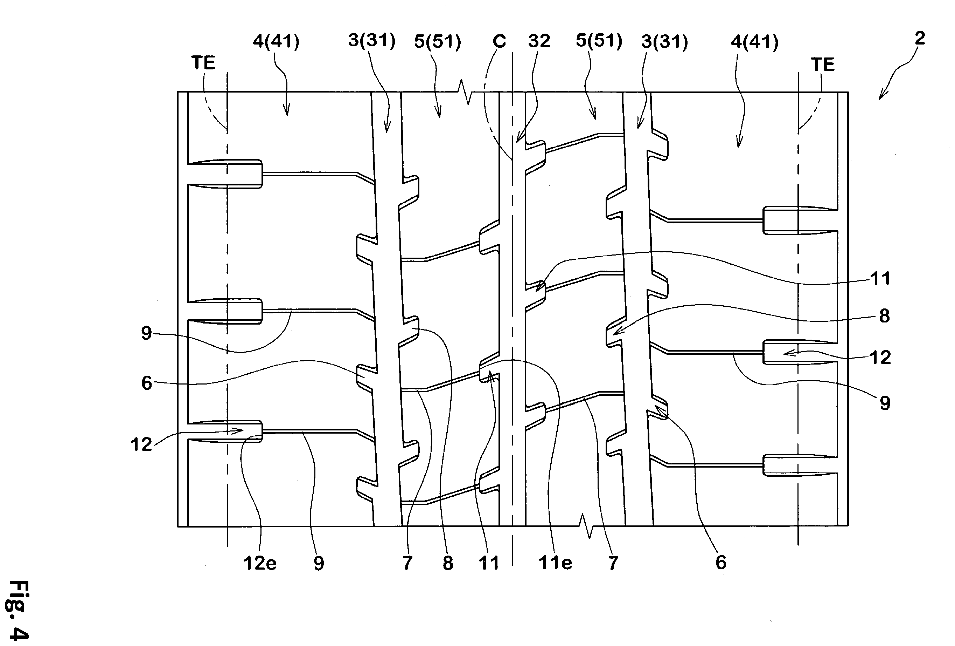

FIG. 4 shows a more specific configuration of the tread portion 2. FIG. 4 shows the tread portion 2 in a mode in which the first main groove 3 is a shoulder main groove 31 which is located farthest from a tire equator C. The shoulder main groove 31 is provided on each of opposed sides across the tire equator C.

In the present embodiment, the first land portion 4 is a shoulder land portion 41 delimited between each shoulder main groove 31 and the corresponding tread ground-contact edge TE. The shoulder land portion 41 is provided on each of the opposed sides across the tire equator C.

Further, a second main groove 32 continuously extending in the tire circumferential direction is formed on the inner side in the tire axial direction relative to the shoulder main grooves 31. In the present embodiment, the second main groove 32 is a crown main groove extending linearly on the tire equator C. The crown main groove may be formed on each of the opposed sides across the tire equator C.

The second land portion 5 is a crown land portion 51 between each shoulder main groove 31 and the crown main groove. The crown land portion 51 is provided on each of the opposed sides across the tire equator C.

Middle main grooves continuously extending in the tire circumferential direction may be formed between the crown main groove and the shoulder main grooves 31. In this case, the middle main grooves each serve as the second main groove 32, and middle land portions between the shoulder main grooves 31 and the middle main grooves each serve as the second land portion 5.

In the tread portion 2 in the mode shown in FIG. 4, the first lateral grooves 6 are formed in the shoulder land portion 41, and the first lateral sipes 7 are formed in the crown land portion 51. The first imaginary extension grooves 6v and the first imaginary extension sipes 7v are imaginary regions respectively obtained by extending the first lateral grooves 6 and the first lateral sipes 7 into the shoulder main grooves 31.

In addition, the second lateral grooves 8 are formed in the crown land portion 51, and the second lateral sipes 9 are formed in the shoulder land portion 41. The second imaginary extension grooves 8v and the second imaginary extension sipes 9v are imaginary regions respectively obtained by extending the second lateral grooves 8 and the second lateral sipes 9 into the shoulder main grooves 31.

The first lateral sipes 7 extending from the first main grooves 3 inward in the tire axial direction, i.e., toward the second main groove 32, preferably communicate with the second main groove 32. With such a configuration, the rigidity in the tire circumferential direction of the tread portion 2 locally further decreases near the first lateral sipes 7, and the effect of removing stones is accelerated. In addition, the drainage performance of the second land portion 5 is improved.

In each second land portion 5 in the present embodiment, third lateral grooves 11 extending outward in the tire axial direction from the second main groove 32 are formed. The drainage performance of the second land portion 5 is improved by the third lateral grooves 11. In addition, the grip performance of the tire is improved on an unpaved road owing to the edge effect exhibited by the third lateral grooves 11. It is noted that the width and the depth of each third lateral groove 11 are, for example, the same as those of each first lateral groove 6.

The third lateral groove 11 has a terminating end 11e in the second land portion 5. Accordingly, the volume of the second land portion 5 and the rigidity thereof in the tire circumferential direction are easily ensured, whereby the wear resistance of the second land portion 5 is improved. In addition, each first lateral sipe 7 is connected to the corresponding third lateral groove 11 at the terminating end 11e thereof. That is, the first lateral sipe 7 communicates with the second main groove 32 via the third lateral groove 11. Accordingly, the drainage performance of the second land portion 5 is easily improved.

In each first land portion 4 in the present embodiment, fourth lateral grooves 12 extending inward in the tire axial direction from the corresponding tread ground-contact edge TE are formed. The drainage performance of the shoulder land portion 41 is improved by the fourth lateral grooves 12. In addition, the grip performance of the tire is improved on an unpaved road owing to the edge effect exhibited by the fourth lateral grooves 12. It is noted that the width and the depth of each fourth lateral groove 12 are, for example, the same as those of each first lateral groove 6.

The fourth lateral groove 12 has a terminating end 12e in the shoulder land portion 41. Accordingly, the volume of the shoulder land portion 41 and the rigidity thereof in the tire circumferential direction are easily ensured, whereby the wear resistance of the shoulder land portion 41 is improved. In addition, each second lateral sipe 9 is connected to the corresponding fourth lateral groove 12 at the terminating end 12e thereof. That is, the second lateral sipe 9 communicates with the tread ground-contact edge TE via the fourth lateral groove 12. Accordingly, the drainage performance of the shoulder land portion 41 is easily improved.

Although the tire according to the present invention has been described above in details, the present invention is not limited to the above-described specific embodiments, and various modifications can be made to practice the present invention. For example, in FIGS. 1, 2, and 4, the second lateral grooves 8 and the second lateral sipes 9 may be omitted.

In addition, the first land portion 4 may be formed so as to be closer to the tire equator C than the shoulder main groove 31 is. In this case, the first land portion 4 is implemented as the crown land portion 51, and the second land portion 5 is implemented as the shoulder land portion 41. Further, the second lateral grooves 8 and the second lateral sipes 9 may be omitted.

### EXAMPLES

Pneumatic tires each having a size of 205/70 R15 and the basic pattern in FIG. 1 were produced as samples based on the specifications in Table 1, and were tested for wear resistance, stone-trapping resistance, grip performance, and defect resistance of land portions. The test methods are as follows.

### <Wear Resistance>

Each sample tire mounted to a rim having a size of 15×6.0J was, under conditions in which each front wheel had an internal pressure of 260 kPa and each rear wheel had an internal pressure of 350 kPa, mounted to a part-time four-wheel-drive passenger car with an engine displacement of 2200 cc and caused to run for 10000 km on an asphalt road surface, and the wear amount of each land portion after the running was measured. The results are indicated as indexes with the result of Example 1 being regarded as 100. A larger numerical value indicates better wear resistance.

### <Stone-Trapping Resistance>

The above-described car was brought into a test course having an unpaved road for evaluation regarding stone trapping and was caused to run for 5 km, and the number of stones trapped into the tread portions after the running was counted. The results are indicated as indexes with the result of Example 1 being regarded as 100. A larger numerical value indicates better steering stability.

### <Grip Performance>

A position measuring device using GPS (Global Positioning System) was mounted in the above-described car, and the car was caused to run on the above-described test course having the unpaved road, with one driver being present in the car. Under these conditions, the starting performance, the braking performance, and the turning performance were measured. The results are indicated as indexes with the result of Example 1 being regarded as 100. A larger numerical value indicates better grip performance.

### <Defect Resistance of Land Portions>

The above-described car was caused to run for 10 km on the above-described test course having the unpaved road. Thereafter, an operator performed visual check of the appearance of the tread portions, thereby checking the defect status of the first land portions. The results are indicated as scores with the result of Example 1 being regarded as 100. A larger numerical value indicates better defect resistance.

**[Table 1]**

| | Comparative Example 1 | Comparative Example 2 | Example 1 | Example 2 | Example 3 | Example 4 |
|---|---|---|---|---|---|---|
| First lateral groove | Present | Present | Present | Present | Present | Present |
| First lateral sipe | Absent | Present | Present | Present | Present | Present |
| Positional relationship between first imaginary extension groove and first imaginary extension sipe | --- | Not overlapping | Overlapping | Overlapping | Overlapping | Overlapping |
| θ1 (°) | 80 | 80 | 80 | 80 | 80 | 80 |
| Wear resistance (index) | 100 | 100 | 100 | 115 | 110 | 90 |
| Stone-trapping resistance (index) | 80 | 80 | 100 | 92 | 95 | 105 |
| Grip performance (index) | 95 | 100 | 100 | 92 | 95 | 105 |
| Defect resistance of land portions (score) | 100 | 100 | 100 | 100 | 100 | 100 |

| | Example 5 | | Example 6 | Example 7 | Example 8 | | Example 9 | | Example 10 |
|---|---|---|---|---|---|---|---|---|---|
| First lateral groove | Present | | Present | Present | Present | | Present | | Present |
| First lateral sipe | Present | | Present | Present | Present | | Present | | Present |
| Positional relationship between first imaginary extension groove and first imaginary extension sipe | Overlapping | | Overlapping | Overlapping | Overlapping | | Overlapping | | Overlapping |
| θ1 (°) | 80 | | 80 | 80 | 80 | | 80 | | 60 |
| Wear resistance (index) | 85 | | 107 | 105 | 95 | | 92 | | 100 |
| Stone-trapping resistance (index) | 107 | | 100 | 100 | 100 | | 100 | | 100 |
| Grip performance (index) | 107 | | 92 | 95 | 105 | | 107 | | 100 |
| Defect resistance of land portions (score) | 100 | | 100 | 100 | 100 | | 100 | | 95 |
| | | | | | | | | | |

| | | Example 11 | | Example 12 | | Example 13 | | Example 14 | |
|---|---|---|---|---|---|---|---|---|---|
| First lateral groove | | Present | | Present | | Present | | Present | |
| First lateral sipe | | Present | | Present | | Present | | Present | |
| Positional relationship between first imaginary extension groove and first imaginary extension sipe θ1 (°) | | Overlapping | | Overlapping | | Overlapping | | Overlapping | |
| | | 70 | | 100 | | 110 | | 120 | |
| Wear resistance (index) | | 100 | | 100 | | 100 | | 100 | |
| Stone-trapping resistance (index) | | 100 | | 100 | | 100 | | 100 | |
| Grip performance (index) | | 100 | | 100 | | 100 | | 100 | |
| Defect resistance of land portions (score) | | 97 | | 100 | | 97 | | 95 | |

As is obvious from Table 1, it has been confirmed that the stone-trapping resistance and the grip performance of the tire of each Example have significantly improved as compared to those of each Comparative Example.

## Claims

1. A tire comprising a tread portion (2), wherein
the tread portion (2) is divided, by a first main groove (3) continuously extending in a tire circumferential direction, into a first land portion (4) located on one side in a tire axial direction relative to the first main groove (3) and a second land portion (5) located on another side in the tire axial direction relative to the first main groove (3),
a first lateral groove (6) extending in the tire axial direction from the first main groove (3) and having a terminating end (6e) in the first land portion (4) is formed in the first land portion (4),
a first lateral sipe (7) extending in the tire axial direction from the first main groove (3) is formed in the second land portion (5), and
a first imaginary extension groove (6v) obtained by extending the first lateral groove (6) into the first main groove (3) overlaps with a first imaginary extension sipe (7v) obtained by extending the first lateral sipe (7) into the first main groove (3), wherein
the first main groove (3) is a shoulder main groove (31) that is located farthest from a tire equator (C), and
the first land portion (4) is a shoulder land portion (41) that is delimited between the shoulder main groove (31) and a tread groundcontact edge (TE),
**characterized in that**
a chamfered portion (62) is formed at an end edge part (61) of the first lateral groove (6) by tilting a side wall (45) of the first land portion (4) relative to a tread surface (46) of the first land portion (4).

2. The tire according to claim 1, wherein
a second lateral groove (8) extending in the tire axial direction from the first main groove (3) and having a terminating end (8e) in the second land portion (5) is formed in the second land portion (5),
a second lateral sipe (9) extending from the first main groove (3) in the tire axial direction is formed in the first land portion (4), and
a second imaginary extension groove (8v) obtained by extending the second lateral groove (8) into the first main groove (3) overlaps with a second imaginary extension sipe (9v) obtained by extending the second lateral sipe (9) into the first main groove (3).

3. The tire according to claim 1 or 2, wherein
a second main groove (32) continuously extending in the tire circumferential direction is formed on an inner side in the tire axial direction relative to the shoulder main groove (31), and
the second land portion (5) is a crown land portion (51) between the shoulder main groove (31) and the second main groove (32).

4. The tire according to claim 3, wherein the first lateral sipe (7) extending inward in the tire axial direction from the first main groove (3) communicates with the second main groove (32).

5. The tire according to any one of claims 1 to 4, wherein a width (W1) of the first lateral groove (6) decreases from the first main groove (3) toward the terminating end (6e).

6. The tire according to claim 2, wherein a width (W2) of the second lateral groove (8) decreases from the first main groove (3) toward the terminating end (8e).

7. The tire according to any one of claims 1 to 6, wherein the chamfered portion (62) is formed on each of opposed sides in the tire circumferential direction of the first lateral groove (6).

8. The tire according to any one of claims 1 to 7, wherein an angle (*θ*1) of the first lateral groove (6) relative to the tire circumferential direction is 70 to 110° .

## Patentansprüche

1. Reifen, der einen Laufflächenabschnitt (2) umfasst, wobei
der Laufflächenabschnitt (2) durch eine erste Hauptrille (3), die sich kontinuierlich in einer Reifenumfangsrichtung erstreckt, in einen ersten Landabschnitt (4), der sich auf einer Seite in einer axialen Richtung des Reifens relativ zu der ersten Hauptrille (3) befindet, und einen zweiten Landabschnitt (5), der sich auf einer anderen Seite in der axialen Richtung des Reifens relativ zu der ersten Hauptrille (3) befindet, unterteilt ist,
eine erste Querrille (6), die sich in der axialen Richtung des Reifens von der ersten Hauptrille (3) aus erstreckt und ein Abschlussende (6e) in dem ersten Landabschnitt (4) aufweist, in dem ersten Landabschnitt (4) gebildet ist,
ein erster Querfeinschnitt (7), der sich in der axialen Richtung des Reifens von der ersten Hauptrille (3) aus erstreckt, in dem zweiten Landabschnitt (5) gebildet ist, und
eine erste imaginäre Verlängerungsrille (6v), die durch Verlängern der ersten Querrille (6) in die erste Hauptrille (3) erhalten wird, einen ersten imaginären Verlängerungsfeinschnitt (7v) überlappt, der durch Verlängern der ersten Querfeinschnitts (7) in die erste Hauptrille (3) erhalten wird, wobei
die erste Hauptrille (3) eine Schulterhauptrille (31) ist, die am weitesten von einem Reifenäquator (C) entfernt ist, und
der erste Landabschnitt (4) ein Schulterlandabschnitt (41) ist, der zwischen der Schulterhauptrille (31) und einer Laufflächenbodenkontaktkante (TE) begrenzt ist,
**dadurch gekennzeichnet, dass**
ein abgeschrägter Abschnitt (62) an einem Endkantenteil (61) der ersten Querrille (6) durch Neigen einer Seitenwand (45) des ersten Landabschnitts (4) relativ zu einer Lauffläche (46) des ersten Landabschnitts (4) gebildet ist.

2. Reifen nach Anspruch 1, wobei
in dem zweiten Landabschnitt (5) eine zweite Querrille (8) gebildet ist, die sich von der ersten Hauptrille (3) in der axialen Richtung des Reifens erstreckt und in dem zweiten Landabschnitt (5) ein Abschlussende (8e) aufweist,
in dem ersten Landabschnitt (4) eine zweite Querrille (9) ausgebildet ist, die sich von der ersten Hauptrille (3) in der axialen Richtung des Reifens erstreckt, und
eine zweite imaginäre Verlängerungsrille (8v), die durch Verlängern der zweiten Querrille (8) in die erste Hauptrille (3) erhalten wird, einen zweiten imaginären Verlängerungsfeinschnitt (9v) überlappt, der durch Verlängern des zweiten Querfeinschnitts (9) in die erste Hauptrille (3) erhalten wird.

3. Reifen nach Anspruch 1 oder 2, wobei
eine zweite Hauptrille (32), die sich kontinuierlich in der Umfangsrichtung des Reifens erstreckt, auf einer Innenseite in der axialen Richtung des Reifens relativ zu der Schulterhauptrille (31) gebildet ist, und
der zweite Landabschnitt (5) ein Kronenlandabschnitt (51) zwischen der Schulterhauptrille (31) und der zweiten Hauptrille (32) ist.

4. Reifen nach Anspruch 3, wobei der erste Querfeinschnitt (7), der sich in der axialen Richtung des Reifens von der ersten Hauptrille (3) nach innen erstreckt, mit der zweiten Hauptrille (32) in Verbindung steht.

5. Reifen nach einem der Ansprüche 1 bis 4, wobei eine Breite (W1) der ersten Querrille (6) von der ersten Hauptrille (3) in Richtung des Abschlussendes (6e) abnimmt.

6. Reifen nach Anspruch 2, wobei eine Breite (W2) der zweiten Querrille (8) von der ersten Hauptrille (3) in Richtung des Abschlussendes (8e) abnimmt.

7. Reifen nach einem der Ansprüche 1 bis 6, wobei der abgeschrägte Abschnitt (62) auf jeder der gegenüberliegenden Seiten in der Reifenumfangsrichtung der ersten Querrille (6) ausgebildet ist.

8. Reifen nach einem der Ansprüche 1 bis 7, wobei ein Winkel (θ1) der ersten Querrille (6) relativ zur Reifenumfangsrichtung 70 bis 110° beträgt.

## Revendications

1. Pneumatique comprenant une portion formant bande de roulement (2), dans lequel
la portion formant bande de roulement (2) est divisée, par une première rainure principale (3) s'étendant en continu dans une direction circonférentielle du pneumatique, en une première portion en relief (4) située sur un côté dans une direction axiale du pneumatique relativement à la première rainure principale (3) et en une seconde portion en relief (5) située sur un autre côté dans la direction axiale du pneumatique relativement à la première rainure principale (3),
une première rainure latérale (6) s'étendant dans la direction axiale du pneumatique depuis la première rainure principale (3) et ayant une extrémité terminale (6e) dans la première portion en relief (4) est formée dans la première portion en relief (4),
une première fente latérale (7) s'étendant dans la direction axiale du pneumatique depuis la première rainure principale (3) est formée dans la seconde portion en relief (5), et
une première rainure en prolongement imaginaire (6v) obtenue en prolongeant la première rainure latérale (6) jusque dans la première rainure principale (3) se chevauche avec une première fente en prolongement imaginaire (7v) obtenue en prolongeant la première fente latérale (7) jusque dans la première rainure principale (3), dans lequel
la première rainure principale (3) est une rainure principale d'épaulement (31) qui est située le plus loin d'un équateur de pneumatique (C), et
la première portion en relief (4) est une portion en relief d'épaulement (41) qui est délimitée entre la rainure principale d'épaulement (31) et un bord de contact au sol de bande de roulement (TE),
**caractérisé en ce que**
une portion chanfreinée (62) est formée au niveau d'une partie de bord d'extrémité (61) de la première rainure latérale (6) en inclinant une paroi latérale (45) de la première portion en relief (4) relativement à une surface de bande de roulement (46) de la première portion en relief (4).

2. Pneumatique selon la revendication 1, dans lequel
une seconde rainure latérale (8) s'étendant dans la direction axiale du pneumatique depuis la première rainure principale (3) et ayant une extrémité terminale (8e) dans la seconde portion en relief (5) est formée dans la seconde portion en relief (5),
une seconde fente latérale (9) s'étendant depuis la première rainure principale (3) dans la direction axiale du pneumatique est formée dans la première portion en relief (4), et
une seconde rainure en prolongement imaginaire (8v) obtenue en prolongeant la seconde rainure latérale (8) jusque dans la première rainure principale (3) se chevauche avec une seconde fente en prolongement imaginaire (9v) obtenue en prolongeant la seconde fente latérale (9) jusque dans la première rainure principale (3).

3. Pneumatique selon la revendication 1 ou 2, dans lequel une seconde rainure principale (32) s'étendant en continu dans la direction circonférentielle du pneumatique est formée sur un côté intérieur dans la direction axiale du pneumatique relativement à la rainure principale d'épaulement (31), et
la seconde portion en relief (5) est une portion en relief de couronne (51) entre la rainure principale d'épaulement (31) et la seconde rainure principale (32).

4. Pneumatique selon la revendication 3, dans lequel la première fente latérale (7) s'étendant vers l'intérieur dans la direction axiale du pneumatique depuis la première rainure principale (3) communique avec la seconde rainure principale (32).

5. Pneumatique selon l'une quelconque des revendications 1 à 4, dans lequel une largeur (W1) de la première rainure latérale (6) diminue depuis la première rainure principale (3) vers l'extrémité terminale (6e).

6. Pneumatique selon la revendication 2, dans lequel une largeur (W2) de la seconde rainure latérale (8) diminue depuis la première rainure principale (3) vers l'extrémité terminale (8e).

7. Pneumatique selon l'une quelconque des revendications 1 à 6, dans lequel la portion chanfreinée (62) est formée sur chacun des côtés opposés dans la direction circonférentielle du pneumatique de la première rainure latérale (6).

8. Pneumatique selon l'une quelconque des revendications 1 à 7, dans lequel un angle (θ1) de la première rainure latérale (6) relativement à la direction circonférentielle du pneumatique est de 70 à 110°.
